# EUROPEAN PATENT SPECIFICATION

(11) **EP 1 182 059 B1**
(45) Date of publication and mention of the grant of the patent: **02.02.2005**
(21) Application number: 01305707.0
(22) Date of filing: 02.07.2001
(51) Int. Cl.: B60C 15/04, B29D 30/48

(54) **Bead core and pneumatic tire using the same**
Wulstkern für Fahrzeugreifen und Fahrzeugreifen mit diesem Kern
Tringle de talon de pneumatique et pneumatique comportant un tel tringle de talon

(30) Priority: 06.07.2000 JP 2000204992
(43) Date of publication of application: 27.02.2002
(73) Proprietor: BRIDGESTONE CORPORATION, Tokyo 104-0031 (JP)
(72) Inventor: Takahashi, Masanobu, Kodaira City, Tokyo (JP)
(74) Representative: Whalley, Kevin

(56) References cited:
- EP-A- 0 834 393
- EP-A- 1 004 460
- US-A- 5 141 033
- PATENT ABSTRACTS OF JAPAN vol. 1995, no. 11, 26 December 1995 (1995-12-26) & JP 07 223412 A (SUMITOMO RUBBER IND LTD), 22 August 1995 (1995-08-22)
- PATENT ABSTRACTS OF JAPAN vol. 1995, no. 11, 26 December 1995 (1995-12-26) & JP 07 215021 A (BRIDGESTONE CORP), 15 August 1995 (1995-08-15)

## Description

This invention relates to a bead core of so-called monostrand type and a pneumatic tire using the same.

In general, so-called monostrand type bead core is constructed by spirally winding a single cord and stacking such spiral windings to each other as plural stages, wherein the single cord is aligned in the plural stages at the cross section of the bead core. In such a bead core, the number of free ends of the single cord becomes minimum (start end and terminal end), so that the resistance to bead burst is excellent.

Such a bead core, corresponding to the preamble of claim 1, is known from JP-A-07 223412.

However, the start end of the single cord in the bead core locates in an axially outermost position of a radially innermost stage, so that the bead core is subjected to a restraint from only one side. As a result, when a large external force is applied to the start end of the bead core in the assembling of a bead filler onto the bead core, the start end slips outward from the above position in the radial direction through an elastic restoring force of the cord itself and may spring up to a sidewall portion of a pneumatic tire according to circumstances. When vulcanization is carried out at such a state to fix the start end to the above slipped position, there is a problem that the start end repeatedly press-contacts with a carcass ply during the running to damage the carcass ply.

It is, therefore, an object of the invention to provide a bead core capable of preventing the slipping of the start end in the winding of the single cord to easily maintain a normal aligning wound state and a pneumatic tire using the same.

According to a first aspect of the invention, there is the provision of in a bead core formed by spirally winding a single cord and stacking spiral windings to each other as plural stages in a radial direction, an improvement wherein a winding start end of the single cord is shifted from an axially outermost or innermost position of a radially innermost first stage to a next position at least corresponding to only one of the single cord, and after the single cord is spirally wound from the first stage to a second stage and arrives on a position above the start end, it is wound on the axially outermost or innermost empty position of the radially innermost first stage.

In the conventional monostrand-type bead core, the start end of the single cord usually locates in an axially outermost or innermost position of a radially innermost stage as previously mentioned. On the contrary, in the bead core according to the invention, the start end of the single cord is shifted from the axially outermost or innermost position to a next position at least corresponding to only one of the single cord to form an empty region in the axially outermost or innermost position. Then, in the winding of the single cord at a second stage next to the radially innermost first stage, after the single cord arrive at a position above start end of the first stage, the single cord is placed on the empty region of the first stage and thereafter returned to a position above the empty region filled with the single cord and further the winding is continues toward a subsequent third stage.

Thus, the start end is strongly restrained by sandwiching from both sides by the continuous single cord. As a result, even if an external force is applied to the start end in the bead core, the start end is not slipped from the given position nor sprung upward and hence the damaging of a carcass ply is prevented.

In a preferable embodiment of the first aspect, the single cord is aligned in checkers in the bead core.

According to a second aspect of the invention, there is the provision of a pneumatic tire comprising a pair of bead portion each including a bead core embedded therein, wherein said bead core is formed by spirally winding a single cord and stacking spiral windings to each other as plural stages in a radial direction in which a winding start end of the single cord is shifted from an axially outermost or innermost position of a radially innermost first stage to a next position at least corresponding to only one of the single cord, and after the single cord is spirally wound from the first stage to a second stage and arrives on a position above the start end, it is wound on the axially outermost or innermost empty position of the radially innermost first stage.

The invention will be described with reference to the accompanying drawings, wherein:
FIG. 1 is a diagrammatically section view of an embodiment of the bead core according to the invention;
FIG. 2 is a diagrammatically section view illustrating a state of mounting a bead filler onto the bead core shown in FIG. 1;
FIG. 3 is a diagrammatically section view of a first embodiment of the pneumatic tire according to the invention;
FIG. 4 is a diagrammatically section view of a second embodiment of the pneumatic tire according to the invention; and
FIG. 5 is a diagrammatically section view of a third embodiment of the pneumatic tire according to the invention.

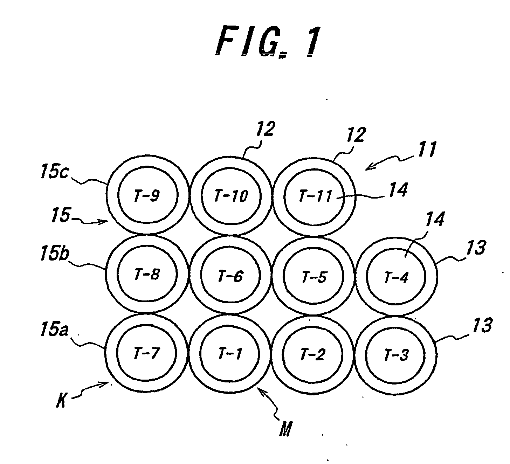

In FIG. 1 is shown an embodiment of the bead core according to the invention. The bead core 11 shown in FIG. 1 is a bead core generally called as a monostrand-type bead core, which is constructed by spirally and continuously winding a single cord 13, a steel cord 14 coated with an insulation rubber 12 in the illustrated embodiment into a cylindrical form and stacking such spiral windings 15 of the cylindrical form to each other outward in a radial direction.

In the above bead core 11, a start end M of the single cord 13 locates in a radially innermost stage, i.e. a first spiral winding 15a. In the first spiral winding 15s, the start end M has hitherto been located in an axially outermost position (left end in FIG. 1) or an axially innermost position (right end in FIG. 1). In this case, however, if the start end M is subjected to an external force, it is slipped outward or inward from the above position in the axial direction and may spring up outward in the radial direction as previously mentioned.

In the invention, therefore, the start end M of the single cord 13 is shifted from the axially outermost or innermost position of the radially innermost stage to a next position at least corresponding to only one of the single cord 13. In the illustrated embodiment, the start end M is shifted inward from the axially outermost position by only one of the single cord 13 in the axial direction to render the axially outermost position into an empty region K. Then, the single cord 13 is spirally wound inward from the start end M in the axial direction three turns to form a cylindrical spiral winding 15a of the first stage. Moreover, the winding order of the single cord 13 is represented by symbols T-1, T-2, ··· T-11 in FIG. 1.

Subsequently, the single cord 13 is spirally wound from a position above the axially innermost position of the first stage in a winding direction opposite to that of the first stage to form a cylindrical spiral winding 15b of a second stage. In the formation of the spiral winding 15b of the second stage, after the winding is carried out above the start end M (sixth turn T-6), the single cord 13 is wound at the empty region K in the axially outermost position of the first stage (seventh turn T-7) and then the winding is carried out at the axially outermost position of the second stage (eighth turn T-8).

Thus, the start end M of the single cord 13 is strongly restrained from both sides by sandwiching between second turn T-2 and seventh turn T-7 of the continuous single cord 13 and hence the winding of the single cord 13 is easily maintained at a normal aligning state and the slipping of the start end M from the given position is never caused even if the external force is applied to the start end M in the bead core 11.

Then, the single cord 13 is spirally wound from a position above the axially outermost position of the second stage in a winding direction opposite to that of the second stage three turns to form a cylindrical spiral winding 15c of a third stage.

When the above spiral windings 15 are stacked to each other in the radial direction, the single cords 13 are accurately overlapped with each other in the radial direction, so that the single cord 13 is aligned at a checkers state in the bead core 11. Moreover, the number of the stages is favorable to be a range of 2 to 6.

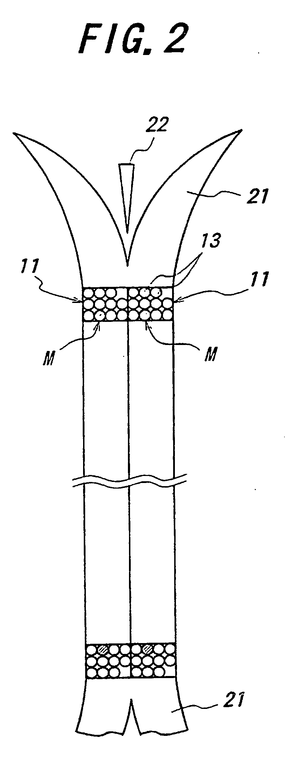

Then, an operation of mounting a bead filler 21 onto the above bead core 11 will be described with reference to FIG. 2. In this case, two bead cores 11 are provided at a joined state in the axial direction. On the other hand, a pair of bead fillers 21 are extruded through an extruder at a state of connecting their base portions to each other as shown in FIG. 2 in order to improve the operation efficiency. The thus extruded bead filler pair are wound on the outside of the two bead cores 11 in the radial direction.

Thereafter, the connected portion of the bead filler pair is cut by a cutter 22 to divide into two bead fillers 21 and at the same time the joined bead cores are separated into individual bead cores 11. In this case, the cutter 22 gives an external force to the single cord 13 constituting the bead core 11, particularly the single cords 13 located at a side adjacent to the cutter.

In the bead core according to the invention, however, the start end M as a free end of the single cord is shifted inward from the axially outermost position of the first stage only by one of the single cord, so that the external force applied to the start end M is fairly decreased. And also, the start end M is strongly restrained between turns T-2 and T-7 of the single cord 13 from both sides, so that the start end M is never slipped out outward from the given position and does not spring up. Further, the single cords 13 located at the radially outermost positions arc never slipped out even if external force is applied because they continue to front and back windings of the single cord 13 in any stages.

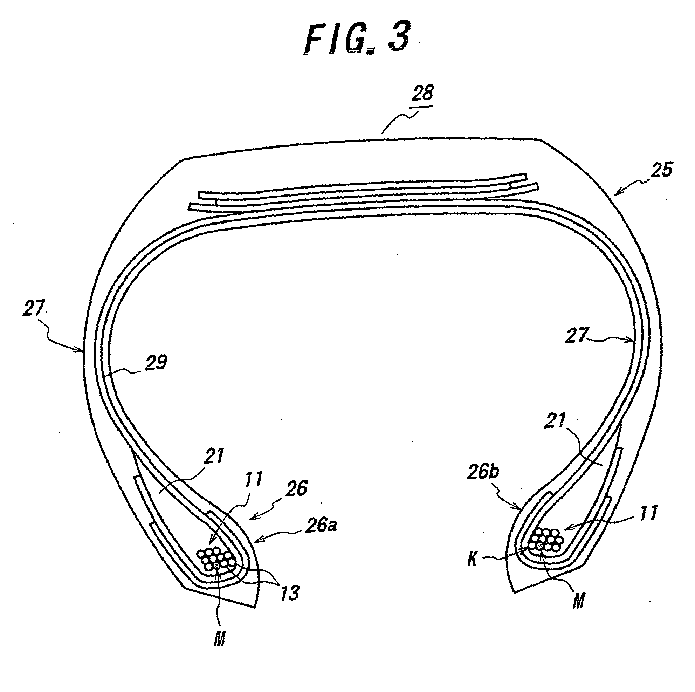

In FIG. 3 is shown a first embodiment of incorporating the above bead core 11 into a pneumatic tire 25 according to the invention. This tire 25 comprises a pair of bead portions 26 each containing the bead core 11 embedded therein, a pair of sidewall portions 27 extending outward from these bead portions 26 in substantially a radial direction, and a substantially cylindrical tread portion 28 connecting outer ends of the sidewall portions 27 in the radial direction.

The sidewall portions 27 and the tread portion 28 are reinforced by a carcass 29 extending substantially in a toroidal form, and both widthwise end portions of the carcass 29 are wound around the bead cores 11 from an inside of the tire toward an outside thereof and moored thereto.

In the bead core 11 embedded in the bead portion 26a (axially left side in FIG. 3), the start end M locates at a bead heel side, while in the bead core 11 embedded in the bead portion 26b (axially right side in FIG. 3), the start end M locates at a bead toe side.

When the start end M locates at the bead toe side as in the bead core 11 embedded in the bead portion 26b, the single cord 13 in the vicinity of the start end M intends to be slipped out by a dragging force directing outward from the carcass 29 in the radial direction (external force) during the vulcanization of the green tire. When the bead core 11 is constructed as mentioned above, however, the start end M is restrained by the single cord 13 from both sides and also the single cord 13 located inward from the start end M in the axial direction continues to front and back windings of the single cord 13, so that the start end M is never slipped out and is easily maintained at the normal aligned state.

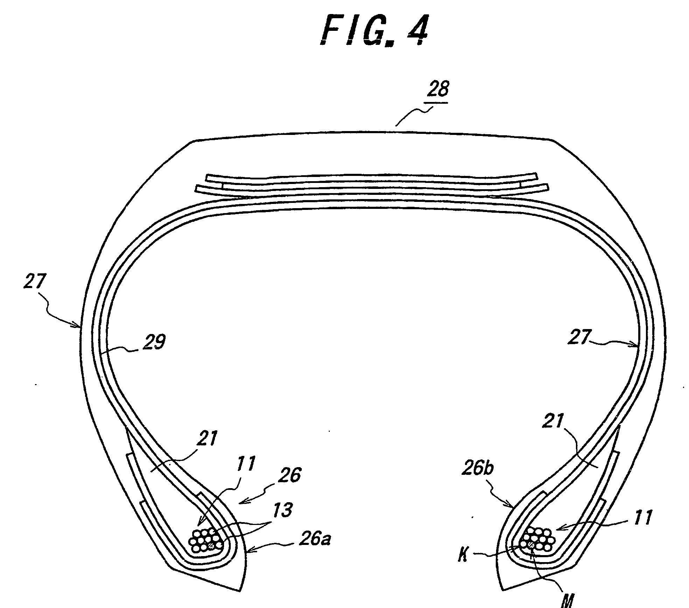

FIG. 4 is a second embodiment of the pneumatic tire according to the invention. In the illustrated embodiment, the start ends M in both the bead cores 11 are located so as to approach to each other, so that the start ends M of the bead cores 11 locate at the bead toe side in both the bead portions 26a, 26b. In this case, the slipping of the single cord 13 in the separation and cutting through the cutter 22 can be prevented in both the bead cores 11.

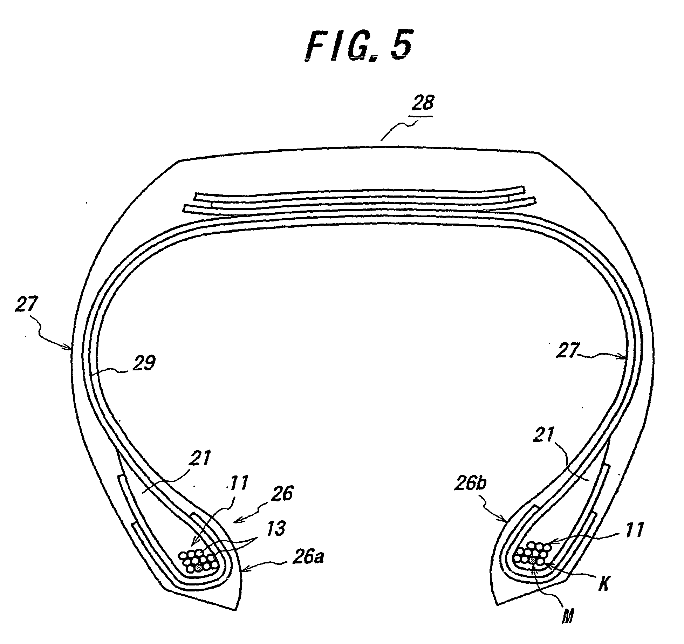

FIG. 5 is a third embodiment of the pneumatic tire according to the invention. In the illustrated embodiment, the start ends M of both the bead cores 11 are located so as to separate away from each other, so that the start ends M of the bead cores 11 in both the bead portions 26a, 26b locate at the bead heel side. In this case, the slipping of the single cord 13 during the vulcanization of the green tire can be prevented in both the bead cores 11.

Although the shifting quantity of the start end M corresponds to only one of the single cord 13 in the above embodiments, it may be two or more of the single cord. And also, the above embodiments are described with respect to the bead core 11 having substantially a rectangular form at section, the invention can be applied to a bead core having substantially a hexagonal form at section.

As mentioned above, according to the invention, the normal aligning state of the single cord in the bead core can easily be maintained by preventing the slipping of the start end of the single cord.

## Claims

1. A bead core (11) formed by spirally winding a single cord (13) and stacking spiral windings (15) to each other as plural stages in a radial direction, **characterized in that** a winding start end (M) of the single cord (13) is shifted from an axially outermost or innermost position of a radially innermost first stage to a next position at least corresponding to only one of the single cord, and after the single cord is spirally wound from the first stage to a second stage and arrives at a position above the start end, it is wound on the axially outermost or innermost empty position of the radially innermost first stage.

2. A bead core as claimed in claim 1, **characterized in that** the single cord (13) is aligned in a checkers pattern in the bead core (11).

3. A pneumatic tire (25) having a pair of bead portions (26) each including a bead core (11) according to claim 1 or 2 embedded therein.

## Patentansprüche

1. Wulstkern (11), der durch spiralförmiges Wickeln eines einzelnen Kordes (13) und Aufschichten der spiralförmigen Wicklungen (15) aufeinander als mehrere Stufen in einer radialen Richtung gebildet wird, **dadurch gekennzeichnet, daß** das Wicklungsstartende (M) des einzelnen Kordes (13) aus einer axial äußersten oder innersten Position einer radial innersten ersten Stufe in eine nächste Position verschoben wird, die mindestens nur einer des einzelnen Kordes entspricht, und daß er, nachdem der einzelne Kord spiralförmig von der ersten Stufe zu einer zweiten Stufe gewickelt wurde und in einer Position über dem Startende ankommt, auf die axial äußerste oder innerste leere Position der radial innersten ersten Stufe gewickelt wird.

2. Wulstkern nach Anspruch 1, **dadurch gekennzeichnet, daß** der einzelne Kord (13) in einem Gittermuster im Wulstkem (11) ausgerichtet ist.

3. Luftreifen (25) mit einem Paar Wulstabschnitten (26), die jeweils einen Wulstkem (11) entsprechend Anspruch 1 oder 2 darin eingebettet umfassen.

## Revendications

1. Tringle (11) formée en enroulant en spirale une corde unique (13) et en empilant les enroulements en spirale (15) les uns sur les autres en plusieurs étapes dans la direction radiale, **caractérisée en ce que** l'extrémité de départ d'enroulement (M) de la corde unique (13) est décalée à partir d'une position axialement la plus extérieure ou la plus intérieure d'une première étape radialement la plus intérieure vers une position suivante qui correspond au moins à un seul (enroulement) de la corde unique, et après que la corde unique soit enroulée en spirale depuis la première étape jusqu'à une seconde étape et après qu'elle arrive en une position au dessus de l'extrémité de départ, elle est enroulée sur la position vide axialement la plus extérieure ou la plus intérieure de la première étape radialement la plus intérieure.

2. Tringle comme revendiqué dans la revendication 1, **caractérisé en ce que** la corde unique (13) est alignée selon un motif en damier dans la tringle (11).

3. Bandage pneumatique (25) possédant une paire de talons (26) chacun comprenant une tringle (11) selon la revendication 1 ou 2 enrobée en son sein.
